# FASCICULE DE BREVET EUROPEEN

(11) **EP 3 387 223 B1**
(45) Date de publication et mention de la délivrance du brevet: **20.11.2019**
(21) Numéro de dépôt: 16819605.3
(22) Date de dépôt: 05.12.2016
(51) Int. Cl.: F01D 19/00, F02C 7/26

(54) **PROCÉDÉ, SYSTÈME ET PROGRAMME D'ORDINATEUR DE SURVEILLANCE D'UNE SÉQUENCE DE DÉMARRAGE D'UNE TURBOMACHINE PAR SUIVI DU RÉGIME DU CORPS HAUTE PRESSION**
VERFAHREN, SYSTEM UND COMPUTERPROGRAMM ZUR ÜBERWACHUNG DER STARTSEQUENZ EINER TURBOMASCHINE MITTELS ÜBERWACHUNG DER GESCHWINDIGKEIT DER HOCHDRUCKWELLE
METHOD, SYSTEM AND COMPUTER PROGRAM FOR MONITORING A TURBOMACHINE START-UP SEQUENCE BY MONITORING THE SPEED OF THE HIGH-PRESSURE SPOOL

(30) Priorité: 07.12.2015 FR 1561929
(43) Date de publication de la demande: 17.10.2018
(73) Titulaire: Safran Aircraft Engines, 75015 Paris (FR)
(72) Inventeur: FOIRET, Guilhem, Alcide, Auguste, 77550 Moissy-Cramayel (FR)
(74) Mandataire: Brevalex
(86) Numéro de dépôt international: PCT/FR2016/053206
(87) Numéro de publication internationale: WO 2017/098124

(56) Documents cités:
- US-A1- 2007 051 111

## Description

### DOMAINE TECHNIQUE

Le domaine de l'invention est celui de la surveillance de l'état de santé de turbomachines, notamment des turboréacteurs et turbopropulseurs d'avions.

L'invention vise plus particulièrement à détecter une dégradation d'un système pouvant impacter le bon déroulement d'une séquence de démarrage d'une turbomachine.

### ÉTAT DE LA TECHNIQUE ANTÉRIEURE

Une mauvaise séquence de mise en fonctionnement d'un moteur de turbomachine peut se traduire notamment par un mauvais allumage du mélange air-carburant dans le moteur. L'absence d'allumage peut avoir plusieurs origines, dont l'insuffisance voire l'absence de carburant, qui peuvent résulter de la dégradation de la pompe carburant, du doseur, ou des injecteurs, ou l'insuffisance voire l'absence d'énergie, qui peuvent résulter de la dégradation de la bougie d'allumage ou encore du système de génération d'étincelles.

La dégradation du système qui entre en jeu dans une séquence de démarrage de la turbomachine peut être surveillée par le biais de la durée d'allumage du mélange air-carburant, qui est définie comme la durée entre l'instant d'injection de carburant dans la chambre de combustion du moteur et l'instant d'allumage de ce mélange.

Ainsi, pour une turbomachine donnée, la durée d'allumage peut être utilisée comme indicateur de la dégradation du système servant au démarrage de la turbomachine. Cet indicateur peut donc être suivi au cours du temps, par mesure à chaque démarrage, et une alerte peut être levée en cas de déviation confirmée de la durée d'allumage mesurée par rapport à une durée de référence. Il est alors possible d'anticiper d'éventuelles défaillances du système de démarrage et de venir réaliser des opérations programmées de maintenance préventive afin de limiter les éventuels coûts engendrés par un non démarrage du moteur.

La position du doseur carburant est une mesure fiable pour déterminer l'instant d'injection du carburant dans la chambre de combustion. Cette position permet en effet d'identifier avec précision le début d'ouverture de la vanne d'alimentation en carburant de la chambre.

Afin de remonter à l'indicateur surveillé, à savoir la durée d'allumage, il est alors nécessaire de détecter l'instant d'allumage mélange air-carburant.

Il est connu qu'une telle détection est réalisée en temps réel par le calculateur de la turbomachine (appelé EEC pour « Electronic Engine Computer ») afin de réguler la loi de dosage au démarrage et de déceler des cas de non allumage. Cette détection d'allumage temps réel doit satisfaire un certain nombre d'exigences.

Elle doit tout d'abord être robuste, car le logiciel du calculateur EEC adapte par la suite la quantité de carburant injecté dans la chambre. Un allumage effectif mais non détecté pourrait compromettre les chances de démarrer le moteur.

Elle doit ensuite être réalisée en temps réel, sans retard, pour adapter à la volée les lois de contrôle de la turbomachine.

En termes de précision, il n'y a pas d'exigence forte, un retard de quelques secondes à la détection de l'instant d'allumage pouvant être toléré.

Cette détection s'opère par ailleurs avec une fréquence d'acquisition des mesures disponibles élevée (traditionnellement, un rafraichissement toutes les 15ms), ce qui entraine une grande quantité de données à traiter. Pour autant, la puissance de calcul du calculateur EEC est somme toute limitée, ce qui contraint le type d'algorithme de détection pouvant être mis en œuvre.

Un algorithme de suivi de l'état de santé ne répond pas au même besoin et par conséquence aux mêmes exigences de performance que l'algorithme de détection de l'instant d'allumage mis en œuvre par le calculateur EEC.

Tout d'abord, l'implémentation d'un tel algorithme de suivi de l'état de santé est généralement séparée en deux parties, avec une partie embarquée dans un calculateur de l'avion, et une partie débarquée dans une station de travail au sol.

Ensuite, son degré de robustesse n'est pas particulièrement critique. Le suivi des indicateurs de santé est en effet réalisé en tendance de vol en vol sur un historique de plusieurs dizaines, voire centaines de vol. Un allumage non détecté ponctuellement n'a donc que peu d'incidence sur les performances globales de l'algorithme de suivi de l'état de santé.

Il n'y a pas ailleurs pas de contraintes de calcul en temps réel. Les calculs peuvent être réalisés a postériori car les dégradations que l'on cherche à détecter sont lentes (elles s'étalent sur plusieurs vols).

En revanche, l'instant d'allumage doit être détecté de la manière la plus précise possible. Cette précision conditionne en effet les performances globales de détection de l'algorithme de suivi de l'état de santé.

En outre, la fréquence d'acquisition des mesures peut être limitée (rafraichissement toutes les secondes, voire plus). L'algorithme de détection de l'instant d'allumage doit donc être robuste vis-à-vis de cette contrainte. Enfin, un calculateur embarqué dédié au suivi de l'état de santé est généralement plus performant que le calculateur EEC. De plus, des calculs de suivi de l'état de santé peuvent être réalisés au sol dans une station de calcul dédiée, ce qui supprime toute contrainte s'agissant du type d'algorithme de détection pouvant être mis en œuvre.

Le calculateur EEC utilise traditionnellement des signaux issus d'un capteur de température des gaz d'échappement pour détecter l'allumage du mélange air-carburant. Cette solution est très robuste, et répond donc bien aux exigences du contrôle et de la régulation de la turbomachine. En revanche, le capteur est placé relativement loin de la chambre de combustion ce qui engendre un retard et une imprécision non acceptables pour les besoins de la surveillance de l'état de santé.

Dans la pratique, la détection d'allumage est effective si le calculateur EEC détecte une augmentation de température d'au moins 35°C après l'injection de carburant. Cette détection crée un retard moyen d'environ 3 secondes auquel s'ajoute une erreur aléatoire (par exemple une erreur du capteur quantifiée de manière statistique).

Une autre technique pour détecter l'allumage du mélange air-carburant consiste à surveiller la pression en amont de la chambre de combustion, appelée PS3 (pression statique dans le plan 3). Juste avant l'allumage, la pression PS3 est très stable. L'allumage du mélange provoque une augmentation brutale (saut) de cette pression d'entrée de chambre qui peut être détectée.

La détection de l'instant d'allumage grâce au suivi de la pression PS3 est très précise, mais relativement peu robuste. Selon les conditions du démarrage, il est assez fréquent que le saut de la pression PS3 soit trop faible pour être détecté. Un retour d'expérience montre ainsi qu'environ 10% des allumages ne sont pas détectés par cette méthode.

### EXPOSÉ DE L'INVENTION

L'invention a pour objectif de proposer une technique de détection de l'instant d'allumage du mélange air-carburant qui soit fiable et précise et permette de répondre aux exigences de performance d'une surveillance de l'état de santé d'un système de démarrage d'une turbomachine.

A cet effet, l'invention propose un procédé de surveillance d'une séquence de démarrage d'une turbomachine qui comporte un compresseur doté d'un rotor, un démarreur apte à entraîner le rotor en rotation et une chambre de combustion, la séquence de démarrage comprenant une première phase qui s'achève à un instant d'injection de carburant dans la chambre de combustion et au cours de laquelle le démarreur est commandé pour augmenter la vitesse de rotation du rotor, et une deuxième phase postérieure à la première phrase qui s'achève lorsque le démarreur cesse d'entraîner le rotor. Le procédé comprend les étapes suivantes :
- acquisition d'un signal représentatif de la vitesse de rotation du rotor pendant la séquence de démarrage ;
- détection d'un instant de rupture dans l'évolution temporelle dudit signal, l'instant de rupture ainsi détecté étant assimilé à un instant d'allumage d'un mélange air-carburant dans la chambre de combustion.

La détection de l'instant de rupture comprend les opérations suivantes :
- détermination d'une première courbe de régression ajustée sur le signal directement représentatif de la vitesse de rotation du rotor pendant la première phase ;
- détermination d'une deuxième courbe de régression ajustée sur le signal directement représentatif de la vitesse de rotation du rotor pendant la deuxième phase ;
- identification de l'instant d'allumage du mélange air-carburant dans la chambre de combustion à partir de l'intersection de la première et de la deuxième courbe de régression.

Certains aspects préférés mais non limitatifs de ce procédé sont les suivants :
- le signal acquis est directement représentatif de la vitesse de rotation du rotor pendant la première phase et la deuxième phase, et la détection de l'instant de rupture consiste à détecter l'intersection d'une évolution temporelle non linéaire au cours de la première phase avec une évolution temporelle linéaire au cours de la deuxième phase ;
- chacune des première et deuxième courbes de régression est associée à un indicateur de qualité, et la séquence de démarrage de la turbomachine est déterminée comme étant anormale lorsqu'un indicateur de qualité est inférieur à un seuil ;
- le signal acquis est celui de la dérivée d'un signal directement représentatif de la vitesse de rotation du rotor pendant la première phase et la deuxième phase, et la détection de l'instant de rupture consiste à détecter l'intersection d'une évolution temporelle linéaire au cours de la première phase avec une évolution temporelle constante au cours de la deuxième phase ;
- il comprend en outre l'acquisition d'un signal représentatif de la position d'une vanne d'alimentation de la chambre de combustion en carburant, et la détermination de l'instant d'injection de carburant dans la chambre de combustion à partir dudit signal représentatif de la position de ladite vanne ;
- il comprend en outre l'acquisition d'un signal représentatif de la pression du flux gazeux circulant en entrée de la chambre de combustion, et l'identification de l'instant d'allumage du mélange air-carburant dans la chambre de combustion lors de la détection d'une variation d'amplitude soudaine dudit signal représentatif de ladite pression ;
- il comprend en outre la détermination d'une durée d'allumage de la turbomachine comme étant la durée entre l'instant d'injection et l'instant d'allumage identifié lors de la détection d'une variation d'amplitude soudaine dudit signal représentatif de ladite pression, ou, en l'absence de détection d'une variation d'amplitude soudaine dudit signal représentatif de ladite pression, comme étant la durée entre l'instant d'injection et l'instant d'allumage auquel l'instant de rupture détecté est assimilé ;
- l'étape de détection d'un instant de rupture dans l'évolution temporelle dudit signal est réalisée au sol par un dispositif de surveillance de l'état de santé de la turbomachine.

L'invention porte également sur un système de surveillance d'une séquence de démarrage d'une turbomachine qui comporte un calculateur configuré pour mettre en œuvre l'étape du procédé de détection d'un instant de rupture dans l'évolution temporelle du signal acquis. L'invention s'étend également à un produit programme d'ordinateur comprenant des instructions de code de programme pour l'exécution de l'étape du procédé de détection d'un instant de rupture dans l'évolution temporelle du signal acquis.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- les figures 1 et 2 représentent l'évolution, au cours d'une séquence de démarrage d'une turbomachine, de la vitesse de rotation d'un rotor de compresseur présent à proximité de la chambre de combustion, et des courbes de régression ajustées sur cette vitesse pour deux phases distinctes de la séquence de démarrage ;
- la figure 3 est un schéma illustrant un mode de réalisation possible d'un procédé selon l'invention ;
- la figure 4 illustre l'évolution, au cours d'une séquence de démarrage d'une turbomachine, de la vitesse de rotation du rotor du compresseur et de la pression en sortie du compresseur.

### EXPOSÉ DÉTAILLÉ DE MODES DE RÉALISATION PARTICULIERS

L'invention porte sur un procédé de surveillance d'une séquence de démarrage d'une turbomachine. La turbomachine comporte une chambre de combustion dans lequel s'effectue l'allumage d'un mélange air-carburant, un injecteur pour alimenter la chambre de combustion en carburant par l'intermédiaire d'une vanne dont la position est régulée par un doseur.

La turbomachine comporte par ailleurs un rotor de compresseur et un démarreur apte à entraîner le rotor en rotation. Le compresseur est de préférence agencé à proximité de la chambre de combustion. Il s'agit par exemple du compresseur haute pression, dans le cas d'une turbomachine à deux corps.

La séquence de démarrage comprend une première phase au cours de laquelle le démarreur est commandé pour augmenter la vitesse de rotation du rotor dans une fenêtre temporelle comprise entre la réception d'un ordre de démarrage de la turbomachine et un instant d'injection de carburant dans la chambre de combustion de la turbomachine. Cette première phase peut être qualifiée de phase pré-injection.

Le procédé peut comprendre l'acquisition d'un signal représentatif de la position de la vanne d'alimentation de la chambre de combustion en carburant, et la détermination de l'instant d'injection de carburant dans la chambre de combustion à partir dudit signal représentatif de la position de ladite vanne. Ainsi, la première phase s'achève dès que l'ouverture de la vanne est détectée.

La séquence de démarrage comprend une deuxième phase postérieure à la première phrase qui s'achève lorsque le démarreur cesse d'entraîner le rotor (débrayage du démarreur).

Cette deuxième phase débute idéalement après l'allumage du mélange air-carburant dans la chambre de combustion, et peut-être qualifiée de phase post-allumage. Pour ce faire, la deuxième phase peut notamment débuter après une durée donnée après la première phase, par exemple 5 secondes après, permettant de s'assurer de l'allumage effectif du mélange air-carburant quelque temps après l'injection de carburant. Cette durée donnée peut être traduite en un seuil sur la vitesse de rotation du rotor permettant de s'assurer que la vitesse de rotation est une vitesse caractéristique de la deuxième phase post-allumage. Ce seuil correspond par exemple à un seuil ne pouvant être atteint au cours de la première phase, par exemple 35% de la vitesse maximale, ou encore à un seuil permettant de suffisamment s'écarter de la vitesse de rotation atteinte à la fin de la première phase, par exemple en dépassant cette vitesse de plus de 5% de sa valeur.

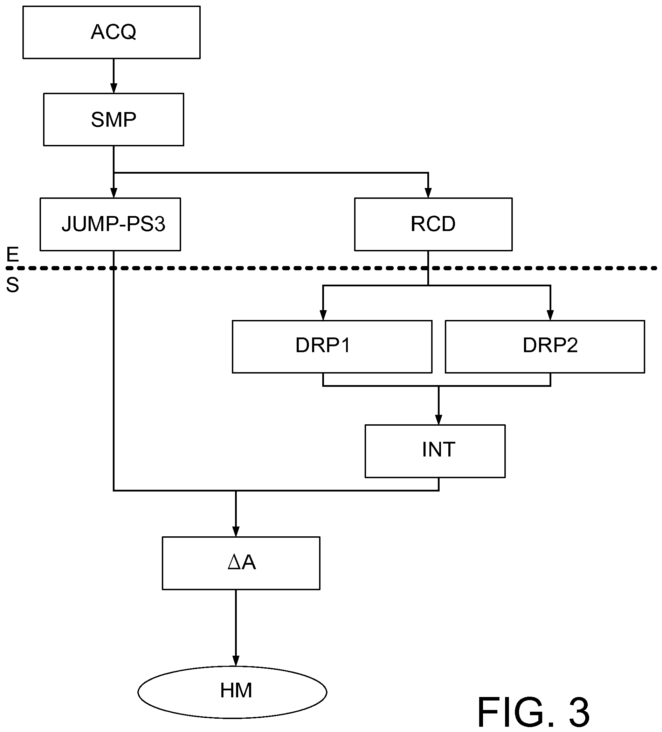

En référence à la figure 3 qui en illustre un mode de réalisation, le procédé comprend l'acquisition « ACQ » d'un signal représentatif, directement ou indirectement, de la vitesse de rotation du rotor pendant la séquence de démarrage. Cette vitesse de rotation est généralement qualifiée de régime N2 lorsqu'elle concerne la vitesse de rotation du rotor équipant le compresseur haute pression d'une turbomachine à double corps. Il sera dans la suite de la description fait référence à la vitesse N2, sans pour autant que cela ne soit limitatif de l'invention.

Dans le cadre de l'invention, l'identification « INT » de l'instant d'allumage du mélange air-carburant dans la chambre de détection est réalisée au moyen du suivi de cette vitesse N2 au cours de la séquence de démarrage. Plus particulièrement, l'invention propose de suivre l'évolution temporelle dudit signal représentatif de la vitesse N2. La détection d'un instant de rupture dans l'évolution temporelle dudit signal permet de discriminer une évolution temporelle caractéristique de la première phase d'une évolution temporelle caractéristique de la deuxième phase. L'instant de rupture ainsi détecté peut alors être assimilé à l'instant d'allumage d'un mélange air-carburant dans la chambre de combustion.

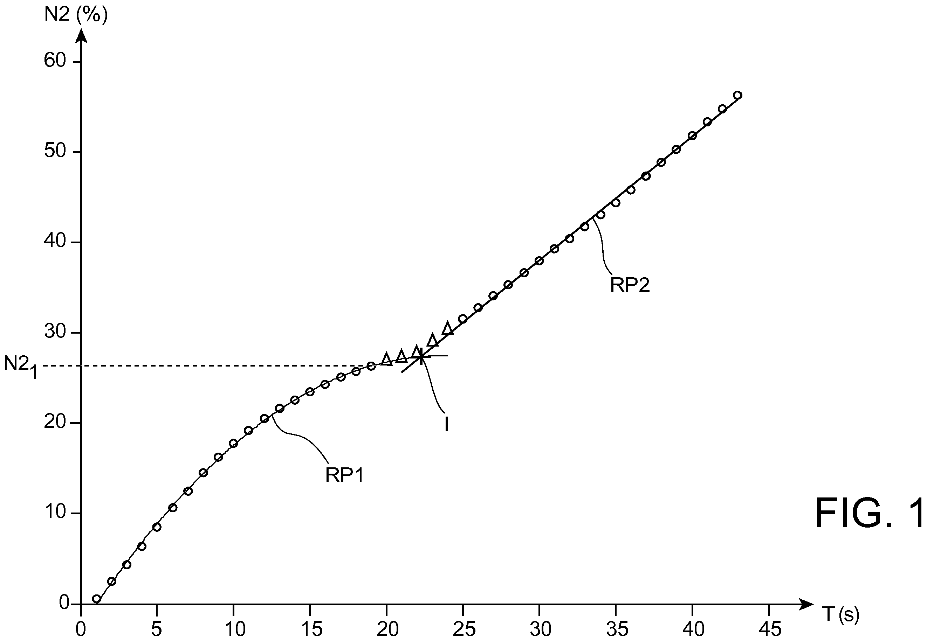

Dans un premier mode de réalisation, le signal acquis est directement représentatif de la vitesse N2 de rotation du rotor pendant la séquence de démarrage. Sur la figure 1 qui représente l'évolution de la vitesse N2, exprimée en pourcentage de la vitesse maximale, au cours du temps, on a procédé à une acquisition de ce signal N2 à une fréquence de 1 HZ. Chacune des acquisitions est représentée par un cercle lorsqu'il s'agit d'une acquisition réalisée au cours de la première ou de la deuxième phase et par un triangle pour les acquisitions réalisées entre la première et la deuxième phase. La première phase comprend une première acquisition de la vitesse N2 à T=1s et une dernière acquisition à T=19s correspondant à l'injection de carburant dans la chambre de combustion. La deuxième phase comprend une première acquisition de la vitesse N2 à T=25s, et une dernière acquisition à T=43s correspondant au débrayage du démarreur, ici réalisé lorsque la vitesse N2 a atteint 55% de la vitesse maximale. La deuxième phase est ici initiée lorsque la vitesse N2 dépasse la vitesse N2₁ atteinte à la fin de la première phase plus 5% de N2₁.

Dans le cadre de ce mode de réalisation, la détection de l'instant de rupture consiste à détecter l'intersection I d'une évolution temporelle non linéaire de la vitesse N2 au cours de la première phase avec une évolution temporelle linéaire de la vitesse N2 au cours de la deuxième phase.

En effet, une fois le mélange air-carburant allumé, la turbomachine et le démarreur fournissent du couple. Le démarreur fournit de moins en moins de couple (décroissance linéaire avec la vitesse) alors que la turbomachine participe de plus en plus à l'entrainement. La somme totale des couples fait que l'accélération de la turbomachine au cours de la deuxième phase est constante jusqu'au débrayage du démarreur. Cette caractéristique est vérifiée quelles que soient les conditions extérieures du démarrage.

La détection de l'instant de rupture peut notamment comprendre les opérations suivantes :
- détermination d'une première courbe de régression RP1 ajustée sur le signal directement représentatif de la vitesse N2 de rotation du rotor pendant la première phase ;
- détermination d'une deuxième courbe de régression RP2 ajustée sur le signal directement représentatif de la vitesse N2 de rotation du rotor pendant la deuxième phase ; cette deuxième courbe RP2 est plus particulièrement une droite du fait de l'évolution temporelle linéaire mentionnée ci-dessus, l'invention n'y étant pas limitée, mais s'étendant au contraire à des évolutions plus complexes ;
- identification de l'instant d'allumage du mélange air-carburant dans la chambre de combustion à partir de l'intersection I de la première RP1 et de la deuxième courbe RP2 de régression polynomiale.

La première RP1 et la deuxième RP2 courbe de régression peuvent être des courbes de régression polynomiale, en particulier une courbe de régression polynomiale de degré 1 pour la deuxième courbe RP2.

Comme représenté sur la figure 1, la première courbe de régression RP1 peut quant à elle être une courbe de régression polynomiale de degré 2, sans pour autant que cela ne soit limitatif de l'invention.

En particulier, lorsque le démarreur est pneumatique et entraîné par de l'air sous pression à peu près constante, le couple fourni par le démarreur diminue linéairement avec l'augmentation du régime N2. De plus, le couple résistant de la turbomachine augmente au fur et à mesure que la vitesse de rotation augmente. La conséquence est que l'accélération du moteur diminue au cours de la première phase. A terme, une asymptote d'accélération nulle pourrait être atteinte où le couple moteur compenserait juste le couple résistant. Généralement, l'injection est réalisée avant d'arriver à ce stade, ce qui explique la forme asymptotique de la courbe temporelle du régime N2 pendant la première phase.

On constate de la figure 1 que les courbes de régression se superposent bien aux points réels représentés par les cercles et les triangles. Chacune des première et deuxième courbes de régression est associée à un indicateur de qualité qui permet de calculer l'écart-type de l'erreur d'estimation du régime N2. Cet écart-type est de 0,25%^{∗}N2 au cours de la première phase et de 0,3%^{∗}N2 au cours de la deuxième phase. Néanmoins, on cherche ici à connaître précisément l'instant d'allumage, et il est plus utile de connaître l'écart-type de l'erreur d'estimation de l'instant pour un N2 donné. Cet écart-type est de 0,17 seconde au cours de la première phase et de 0,2 seconde au cours de la deuxième phase.

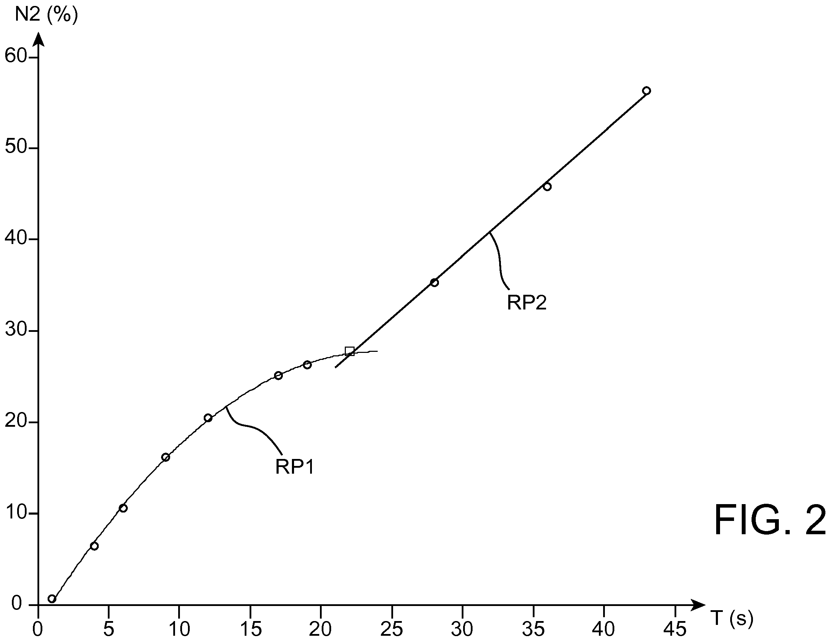

Comme représenté sur la figure 2, les deux courbes de régression RP1 et RP2 peuvent tout aussi bien être estimées à partir de moins de données, au minimum 5 acquisitions étant nécessaires pour la régression du second ordre ajustée à la première phase et au minimum 3 acquisitions étant nécessaires pour la régression du premier ordre ajustée à la deuxième phase. Ainsi, sur la figure 2, la première phase ne comprend que sept acquisitions (correspondant au début de la rotation comme point de départ et à l'injection de carburant comme point final, avec entre ces deux points une acquisition correspondant à tous les 5% de régime, jusqu'à 25%), tandis que la deuxième phase ne comprend que trois acquisitions (prises respectivement lorsque la vitesse N2 est à 35%, 45% et 55% de la vitesse maximale).

Sur la figure 2, le rectangle correspond à l'instant d'allumage déterminé au moyen de la détection d'un saut d'amplitude de la pression PS3. L'instant d'allumage ainsi déterminé par saut de PS3 est de 22,045 secondes. On peut y comparer l'instant d'allumage déterminé par identification de l'instant de rupture de l'évolution temporelle de la vitesse N2 (identification de l'intersection des courbes de régression des première et deuxième phases dans le cadre de la variante de réalisation représenté sur la figure 3) qui est de 22,121 secondes. Ainsi l'erreur de détection par suivi de la vitesse N2 par rapport à un suivi de la pression PS3 est de 0,076 secondes, soit une erreur négligeable par rapport à l'événement que l'on souhaite détecter.

Dans un second mode de réalisation, le signal acquis est celui de la dérivée d'un signal directement représentatif de la vitesse de rotation du rotor pendant la séquence de démarrage. En d'autres termes, on utilise ici l'accélération et un changement de son évolution temporelle pour détecter l'instant d'allumage. Ainsi, dans ce mode de réalisation, la détection de l'instant de rupture consiste à détecter l'intersection d'une évolution temporelle linéaire au cours de la première phase (décroissance de l'accélération jusqu'à être quasi-nulle au moment de l'injection de carburant) avec une évolution temporelle constante au cours de la deuxième phase (depuis une augmentation brutale au moment de l'allumage).

Comme pour le premier mode de réalisation, l'instant de rupture peut être déterminé comme étant l'intersection de courbes de régression de chacune des premières et deuxièmes phases. En variante, la détection de l'instant de rupture comprend la détermination du minimum de la dérivée après injection de carburant dans la chambre de combustion.

On relèvera que le calcul de la dérivée du régime N2 nécessite l'acquisition du régime à suffisamment haute fréquence pour obtenir une précision suffisante. Ce deuxième mode de réalisation est donc plus adapté à une mise en œuvre par logiciel embarqué dans le calculateur EEC. En revanche, il permet une détection temps réel.

Dans une réalisation possible représentée sur la figure 3, l'invention propose d'associer à la détection de l'instant d'allumage par suivi du régime N2 une détection d'allumage par suivi de la pression du flux gazeux circulant en entrée de la chambre de combustion, par exemple la pression PS3 dans le cas d'une turbomachine double corps.

Le procédé selon l'invention peut être implémenté de manière embarquée au sein d'un calculateur de l'avion, ou au contraire être implémenté de manière débarquée au sein d'une station au sol. Comme représenté sur la figure 3, il peut également être réalisée dans ces deux domaines embarqué E / sol S, la frontière embarqué/sol pouvant néanmoins être adaptée selon les besoins et contraintes de la turbomachine et de l'avion.

Le procédé selon l'invention comprend l'acquisition au cours du temps « ACQ. », et l'échantillonnage « SMP », du signal représentatif de la vitesse N2 de rotation du rotor et du signal représentatif de la pression PS3 du flux gazeux circulant en entrée de la chambre de combustion pendant la séquence de démarrage. Les différents échantillons du signal représentatif de la vitesse N2 de rotation du rotor sont enregistrés lors d'une opération « RCD ».

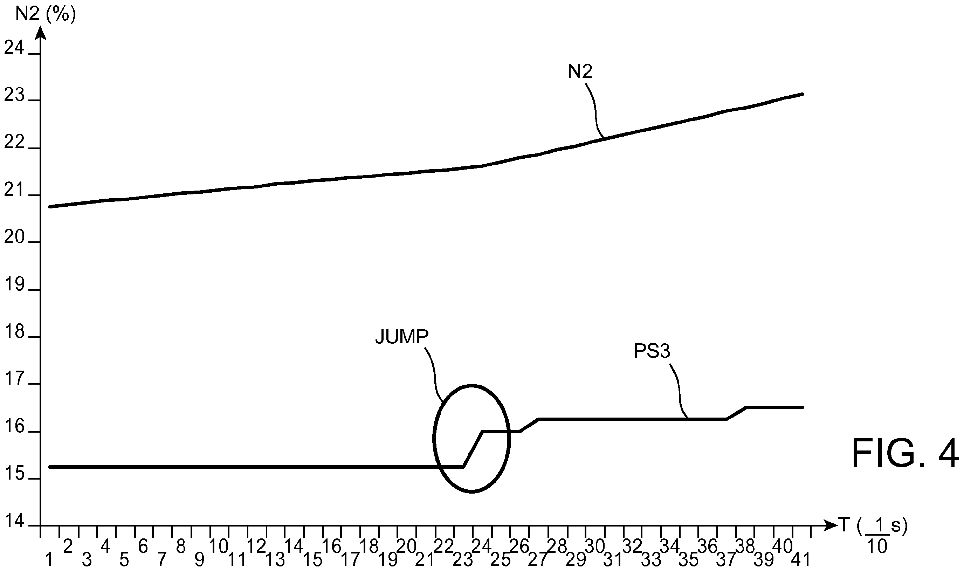

Le procédé comprend l'identification de l'instant d'allumage du mélange air-carburant dans la chambre de combustion lors de la détection « JUMP-PS3 » d'une variation d'amplitude soudaine dudit signal représentatif de ladite pression. Une telle variation soudaine JUMP est illustrée sur la figure 4.

Les opérations précédemment citées sont mises en œuvre dans le domaine embarqué E par un logiciel dans un calculateur avion. Les opérations qui sont décrites par la suite sont mises en œuvre dans le domaine sol S, par exemple par un dispositif de surveillance de l'état de santé de la turbomachine.

Les différents échantillons du signal représentatif de la vitesse N2 de rotation du rotor enregistrés lors de l'opération « RCD » sont analysés afin de déterminer au cours d'une opération « DRP1 » une première courbe de régression ajustée sur le signal N2 pendant la première phase, et au cours d'une opération « DRP2 » une deuxième courbe de régression ajustée sur le signal N2 pendant la deuxième phase. Puis au cours d'une opération « INT » on procède à l'identification de l'instant d'allumage à partir de l'intersection de la première et de la deuxième courbe de régression.

Lorsque l'instant d'allumage a pu être déterminé au moyen du suivi de la pression PS3, on détermine au cours d'une opération « ΔA » la durée d'allumage comme étant la durée entre l'instant d'injection et l'instant d'allumage identifié par le saut de PS3.

En l'absence de détermination de l'instant d'allumage au moyen du suivi de la pression PS3, l'opération « ΔA » est réalisé en exploitant la détermination de l'instant d'allumage réalisé au moyen du suivi de la vitesse N2.

La durée d'allumage ainsi déterminé peut être exploitée par les algorithmes de suivi de l'état de santé de la turbomachine, au cours d'une opération référencée « HM » sur la figure 3.

Les principes décrits ci-dessus ont été appliqués sur une base de données de 500 démarrages réels.

Sur ces 500 démarrages, 50 allumages n'ont pu être détectés par la détection à partir de la mesure PS3, soit environ 10% des démarrages.

La détection par la mesure PS3 étant la référence en termes de précision, l'écart moyen avec la détection par la mesure régime N2 est de 0.15 secondes (dans le sens d'un retard de la détection grâce au N2 par rapport à la détection sur le saut de PS3). Cette erreur est négligeable vis-à-vis de l'évènement que l'on cherche à détecter et du même ordre de grandeur que la période de temps standard de l'échantillonnage des algorithmes de suivi de l'état de santé (généralement au maximum 8Hz, soit une période de 0,125 sec). Ainsi, le procédé illustré sur la figure 3 permet d'assurer un taux de détection de l'allumage du mélange air-carburant lors du démarrage de 100%, et une précision compatible avec les exigences des algorithmes de suivi de l'état de santé.

Dans une variante de réalisation, chacune des première et deuxième courbes de régression est associée à un indicateur de qualité, et la séquence de démarrage de la turbomachine est déterminée comme étant anormale lorsqu'un indicateur de qualité est inférieur à un seuil. Les données de la séquence de démarrage peuvent alors être étiquetées comme étant invalides, et la séquence de démarrage anormale n'est pas utilisée par les algorithmes de suivi de l'état de santé.

L'invention n'est pas limitée au procédé tel que précédemment décrit, mais s'étend également à un système de surveillance d'une séquence de démarrage d'une turbomachine qui comporte un compresseur doté d'un rotor, un démarreur apte à entraîner le rotor en rotation et une chambre de combustion, le système de surveillance étant caractérisé en ce qu'il comprend un calculateur configuré pour mettre en œuvre l'étape du procédé de détection d'un instant de rupture dans l'évolution temporelle du signal acquis. Ce système de surveillance peut notamment être un système déporté au sol. Il peut notamment mettre en œuvre les opérations « DRP1, « DRP2 » et « INT » de la figure 3.

L'invention s'étend par ailleurs à un produit programme d'ordinateur comprenant des instructions de code de programme pour l'exécution de l'étape du procédé de détection d'un instant de rupture dans l'évolution temporelle du signal acquis.

## Revendications

1. Procédé de surveillance d'une séquence de démarrage d'une turbomachine qui comporte un compresseur doté d'un rotor, un démarreur apte à entraîner le rotor en rotation et une chambre de combustion, la séquence de démarrage comprenant une première phase qui s'achève à un instant d'injection de carburant dans la chambre de combustion et au cours de laquelle le démarreur est commandé pour augmenter la vitesse de rotation du rotor, et une deuxième phase postérieure à la première phrase qui s'achève lorsque le démarreur cesse d'entraîner le rotor, le procédé comprenant l'acquisition (ACQ) d'un signal représentatif de la vitesse de rotation (N2) du rotor pendant la séquence de démarrage, et la détection (DRP1, DRP2, INT) d'un instant de rupture dans l'évolution temporelle dudit signal, l'instant de rupture ainsi détecté étant assimilé à un instant d'allumage d'un mélange air-carburant dans la chambre de combustion, le procédé étant **caractérisé en ce que** la détection de l'instant de rupture comprend les opérations suivantes :
- détermination d'une première courbe de régression (RP1) ajustée sur le signal acquis pendant la première phase ;
- détermination d'une deuxième courbe de régression (RP2) ajustée sur le signal acquis pendant la deuxième phase ;
- identification de l'instant d'allumage du mélange air-carburant dans la chambre de combustion à partir de l'intersection (I) de la première et de la deuxième courbe de régression.

2. Procédé selon la revendication 1, dans lequel le signal acquis est directement représentatif de la vitesse de rotation du rotor pendant la première phase et la deuxième phase, et dans lequel la détection de l'instant de rupture consiste à détecter l'intersection (I) d'une évolution temporelle non linéaire au cours de la première phase avec une évolution temporelle linéaire au cours de la deuxième phase.

3. Procédé selon la revendication 2, dans lequel la première (RP1) et la deuxième (RP2) courbe de régression sont des courbes de régression polynomiale.

4. Procédé selon la revendication 3, dans lequel la première courbe de régression (RP1) est une courbe de régression polynomiale de degré 2.

5. Procédé selon l'une des revendications 1 à 4, dans lequel chacune des première et deuxième courbes de régression est associée à un indicateur de qualité, et dans lequel la séquence de démarrage de la turbomachine est déterminée comme étant anormale lorsqu'un indicateur de qualité est inférieur à un seuil.

6. Procédé selon la revendication 1, dans lequel le signal acquis est celui de la dérivée d'un signal directement représentatif de la vitesse de rotation du rotor pendant la première phase et la deuxième phase, et dans lequel la détection de l'instant de rupture consiste à détecter l'intersection d'une évolution temporelle linéaire au cours de la première phase avec une évolution temporelle constante au cours de la deuxième phase.

7. Procédé selon l'une des revendications 1 à 6, comprenant en outre l'acquisition d'un signal représentatif de la position d'une vanne d'alimentation de la chambre de combustion en carburant, et la détermination de l'instant d'injection de carburant dans la chambre de combustion à partir dudit signal représentatif de la position de ladite vanne.

8. Procédé selon l'une des revendications 1 à 7, comprenant en outre l'acquisition d'un signal représentatif de la pression (PS3) du flux gazeux circulant en entrée de la chambre de combustion, et l'identification de l'instant d'allumage du mélange air-carburant dans la chambre de combustion lors de la détection d'une variation d'amplitude soudaine (JUMP-PS3) dudit signal représentatif de ladite pression.

9. Procédé selon la revendication 8, comprenant en outre la détermination d'une durée d'allumage de la turbomachine (ΔA) comme étant la durée entre l'instant d'injection et l'instant d'allumage identifié lors de la détection d'une variation d'amplitude soudaine dudit signal représentatif de ladite pression, ou, en l'absence de détection d'une variation d'amplitude soudaine dudit signal représentatif de ladite pression, comme étant la durée entre l'instant d'injection et l'instant d'allumage auquel l'instant de rupture détecté est assimilé.

10. Procédé selon l'une des revendications 1 à 9, dans lequel l'étape de détection d'un instant de rupture dans l'évolution temporelle dudit signal est réalisée au sol (S) par un dispositif de surveillance de l'état de santé de la turbomachine.

11. Procédé selon l'une des revendications 1 à 10, dans lequel la deuxième phase débute dès lors que la vitesse de rotation du rotor dépasse un seuil prédéterminé.

12. Système de surveillance d'une séquence de démarrage d'une turbomachine qui comporte un compresseur doté d'un rotor, un démarreur apte à entraîner le rotor en rotation et une chambre de combustion, le système de surveillance étant **caractérisé en ce qu'**il comprend un calculateur configuré pour mettre en œuvre l'étape du procédé selon l'une quelconque des revendications 1 à 11 de détection d'un instant de rupture dans l'évolution temporelle du signal acquis.

13. Produit programme d'ordinateur comprenant des instructions de code de programme pour l'exécution de l'étape du procédé selon quelconque des revendications 1 à 11 de détection d'un instant de rupture dans l'évolution temporelle du signal acquis.

## Patentansprüche

1. Verfahren zur Überwachung einer Startsequenz eines Turbotriebwerks, das einen mit einem Rotor ausgestatteten Verdichter, einen Starter, der geeignet ist, den Rotor in Drehbewegung zu versetzen, und eine Brennkammer aufweist, wobei die Startsequenz eine erste Phase umfasst, die zu einem Zeitpunkt des Einspritzens von Brennstoff in die Brennkammer endet und in der der Starter angesteuert wird, um die Drehgeschwindigkeit des Rotors zu erhöhen, sowie eine auf die erste Phase nachfolgende zweite Phase umfasst, die endet, sobald der Starter aufhört, den Rotor zu treiben, wobei das Verfahren die Erfassung (ACQ) eines Signals, das die Drehgeschwindigkeit (N2) des Rotors während der Startsequenz darstellt, und die Erkennung (DRP1, DRP2, INT) eines Zeitpunkts eines Bruchs in dem zeitlichen Verlauf des genannten Signals umfasst, wobei der so erkannte Bruch-Zeitpunkt mit einem Zeitpunkt des Zündens eines Luft-Brennstoff-Gemischs in der Brennkammer gleichgesetzt wird,
**dadurch gekennzeichnet,**
**dass** die Erkennung des Bruch-Zeitpunkts die folgenden Verfahrensschritte umfasst:
- Bestimmung einer ersten Regressionskurve (RP1), die mit dem in der ersten Phase erfassten Signal abgeglichen wird,
- Bestimmung einer zweiten Regressionskurve (RP2), die mit dem in der zweiten Phase erfassten Signal abgeglichen wird,
- Identifizierung des Zeitpunkts des Zündens des Luft-Brennstoff-Gemischs in der Brennkammer aus der Schnittstelle (I) der ersten und der zweiten Regressionskurve.

2. Verfahren nach Anspruch 1, bei dem das erfasste Signal die Drehgeschwindigkeit des Rotors während der ersten und der zweiten Phase direkt darstellt, und bei dem die Erkennung des Bruch-Zeitpunkts darin besteht, die Schnittstelle (I) eines nicht linearen zeitlichen Verlaufs während der ersten Phase mit einem linearen zeitlichen Verlauf während der zweiten Phase zu erkennen.

3. Verfahren nach Anspruch 2, bei dem die erste (RP1) und die zweite Regressionskurve (RP2) polynomische Regressionskurven sind.

4. Verfahren nach Anspruch 3, bei dem die erste Regressionskurve (RP1) eine polynomische Regressionskurve zweiten Grades ist.

5. Verfahren nach einem der Ansprüche 1 bis 4, bei dem jede der beiden Regressionskurven einem Qualitätsindikator zugeordnet ist und bei dem die Startsequenz des Turbotriebwerks als anormal bestimmt ist, wenn ein Qualitätsindikator unter einem Schwellenwert liegt.

6. Verfahren nach Anspruch 1, bei dem das erfasste Signal dasjenige der Ableitung eines Signals ist, das die Drehgeschwindigkeit des Rotors während der ersten und der zweiten Phase direkt darstellt, und bei dem die Erkennung des Bruch-Zeitpunkts darin besteht, die Schnittstelle (I) eines linearen zeitlichen Verlaufs während der ersten Phase mit einem konstanten zeitlichen Verlauf während der zweiten Phase zu erkennen.

7. Verfahren nach einem der Ansprüche 1 bis 6, das ferner die Erfassung eines Signals, das die Stellung eines Zufuhrventils für Brennstoff zur Brennkammer darstellt, sowie die Bestimmung des Einspritzzeitpunkts von Brennstoff in die Brennkammer aus dem genannten Signal, das die Stellung des genannten Ventils darstellt, umfasst.

8. Verfahren nach einem der Ansprüche 1 bis 7, das ferner die Erfassung eines Signals, das den Druck (PS3) des im Eintrittsbereich zur Brennkammer zirkulierenden Gasstroms darstellt, sowie die Identifizierung des Zeitpunkts des Zündens des Luft-Brennstoff-Gemischs in der Brennkammer beim Erkennen einer plötzlichen Anplitudenveränderung (JUMP-PS3) des genannten Signals, das den Druck darstellt, umfasst.

9. Verfahren nach Anspruch 8, das ferner die Bestimmung einer Zünddauer des Turbotriebwerks (ΔA) als Dauer zwischen dem Einspritzzeitpunkt und dem Zündzeitpunkt, der beim Erkennen einer plötzlichen Anplitudenveränderung des genannten Signals, das den genannten Druck darstellt, identifiziert wird, oder - falls keine Erkennung einer plötzlichen Anplitudenveränderung des genannten Signals, das den genannten Druck darstellt, erfolgt - als Dauer zwischen dem Einspritzzeitpunkt und dem Zündzeitpunkt, mit dem der erkannte Bruch-Zeitpunkt gleichgesetzt wird, umfasst.

10. Verfahren nach einem der Ansprüche 1 bis 9, bei dem der Verfahrensschritt der Erkennung eines Bruch-Zeitpunkts im zeitlichen Verlauf des genannten Signals auf dem Boden (S) durch eine Vorrichtung zur Überwachung des einwandfreien technischen Zustands des Turbotriebwerks erfolgt.

11. Verfahren nach einem der Ansprüche 1 bis 10, bei dem die zweite Phase einsetzt, sobald die Drehgeschwindigkeit des Rotors einen zuvor festgelegten Schwellenwert überschreitet.

12. System zur Überwachung einer Startsequenz eines Turbotriebwerks, das einen mit einem Rotor ausgestatteten Verdichter, einen Starter, der geeignet ist, den Rotor in Drehbewegung zu versetzen, und eine Brennkammer aufweist,
**dadurch gekennzeichnet,**
**dass** es einen Rechner umfasst, der konfiguriert ist, um den Verfahrensschritt nach einem der Ansprüche 1 bis 11 der Erkennung eines Bruch-Zeitpunkts im zeitlichen Verlauf des erfassten Signals auszuführen.

13. Rechner-Programmprodukt, das Programmkode-Anweisungen zur Durchführung des Verfahrensschritts nach einem der Ansprüche 1 bis 11 der Erkennung eines Bruch-Zeitpunkts im zeitlichen Verlauf des erfassten Signals enthält.

## Claims

1. Method of monitoring a start-up sequence of a turbomachine that comprises a compressor equipped with a rotor, a starter capable of driving the rotor in rotation and a combustion chamber, the start-up sequence comprising a first phase that terminates at the instant at which fuel is injected into the combustion chamber and during which the starter is controlled to increase the rotation speed of the rotor, and a second phase after the first phase that terminates when the starter stops driving the rotor, the method including acquisition (ACQ) of a signal representative of the rotation speed (N2) of the rotor during the start sequence and, detection (DRP1, DRP2, INT) of an instant at which there is a sudden change in the rate of change of said signal, the sudden change instant thus detected being deemed to be the instant at which an air-fuel mix is ignited in the combustion chamber, the method being **characterised in that** the detection of the instant of the sudden change includes the following operations:
- determination of a first regression curve (RP1) adjusted on the signal acquired during the first phase;
- determination of a second regression curve (RP2) adjusted on the signal acquired during the second phase;
- identification of the instant of ignition of the air-fuel mix in the combustion chamber starting from the intersection (I) of the first and the second regression curves.

2. Method according to claim 1, in which the acquired signal is directly representative of the rotation speed of the rotor during the first phase and the second phase, and in which detection of the instant of the sudden change consists of detecting the intersection (I) of a non-linear variation with time during the first phase and a linear variation with time during the second phase.

3. Method according to claim 2, in which the first regression curve (RP1) and the second regression curve (RP2) are polynomial regression curves.

4. Method according to claim 3, in which the first regression curve (RP1) is a second degree polynomial regression curve.

5. Method according to one of claims 1 to 4, in which each of the first and second regression curves is associated with a quality indicator, and in which the turbomachine start-up instant is determined as being abnormal when a quality indicator is lower than a threshold.

6. Method according to claim 1, in which the acquired signal is the derivative of a signal directly representative of the rotation speed of the rotor during the first phase and the second phase, and in which detection of the instant of the sudden change consists of detecting the intersection of a linear variation with time during the first phase and a constant variation with time during the second phase.

7. Method according to one of claims 1 to 6, also comprising the acquisition of a signal representative of the position of a fuel combustion chamber supply valve, and determination of the instant at which fuel is injected into the combustion chamber starting from said signal representative of the position of said valve.

8. Method according to one of claims 1 to 7, also comprising the acquisition of a signal representative of the pressure (PS3) of the gas flow circulating at the inlet to the combustion chamber, and identification of the ignition instant of the air-fuel mix into the combustion chamber when detecting of a sudden variation (JUMP-PS3) in the amplitude of said signal representative of said pressure.

9. Method according to claim 8, also comprising determination of a turbomachine ignition duration (ΔA) as being the duration between the injection instant and the ignition instant identified by the detection of a sudden variation of the amplitude of said signal representative of said pressure, or in the absence of detection of a sudden variation of the amplitude of said signal representative of said pressure, as being the duration between the injection instant and the ignition instant deemed to be the same as the instant of the detected sudden change.

10. Method according to one of claims 1 to 9, in which the step to detect a sudden change instant in the variation of said signal with time is made on the ground (S) by a turbomachine health monitoring device.

11. Method according to one of claims 1 to 10, in which the second phase begins as soon as the rotation speed of the rotor exceeds a predetermined threshold.

12. System for monitoring a turbomachine start-up sequence that comprises a compressor provided with a rotor, a starter capable of driving the rotor in rotation and a combustion chamber, the monitoring system being **characterised in that** it comprises a computer configured to implement the step in the method according to any one of claims 1 to 11 for detection of a sudden change instant in the variation with time of the acquired signal.

13. Computer program including program code instructions for execution of the step in the method according to any one of claims 1 to 11 for detecting an instant of sudden change instant in the variation with time of the acquired signal.
